# EUROPEAN PATENT SPECIFICATION

(11) **EP 0 935 408 B1**
(45) Date of publication and mention of the grant of the patent: **06.11.2002**
(21) Application number: 97936006.2
(22) Date of filing: 20.08.1997
(51) Int. Cl.: A01D 78/10

(54) **AGRICULTURAL HARVESTING DEVICE**
LANDWIRTSCHAFTLICHE ERNTEMASCHINE
EQUIPEMENT AGRICOLE SERVANT AUX RECOLTES

(30) Priority: 22.08.1996 SI 9600026
(43) Date of publication of application: 18.08.1999
(73) Proprietor: Sip, Strojna Industrija, 3311 Sempeter v Savinjski dolini (SI)
(72) Inventor: SMIT, Maksimiljan, 3304 Tabor (SL)
(74) Representative: Winter, Brandl & Partner
(86) International application number: SI9700024
(87) International publication number: WO98007309

(56) References cited:
- EP-A- 0 383 120
- EP-A- 0 415 301
- EP-A- 0 614 604
- EP-A- 0 680 688

## Description

The invention refers to an agricultural harvesting device, as for example swather or tedder, in general to an agricultural harvesting device with at least one vertical axle and a feeling-supporting device, on which at least one adjustable rotary element is fixed and equipped with a support of suspension elements.

Proceeding from the agricultural harvesting devices known up to now and hereinafter presented in detail, this invention is based on the problem, how to achieve the smallest possible vertical movement of the gravity centre during the movement of the machine with regard to the vertical measures of each particular terrain unevenness enabling at the same time an economical possibility of connecting it to the fixed coupling of the traction machine, the result of which should be smoother running of the device on uneven terrain, which would enable comparatively higher operating speeds.

EP-A-383 120 discloses a harvesting device in which the device is connected through a supporting bond, a chasis support and a supporting axle with a mounting plate of a feeling-supporting device having a least one supporting wheel embedded on each rigid wheel axle. The front and rear oscillating bonds are separately hinged at the mounting plate and connected to each other by means of a connecting bar adjustable in lenght such that the angle between the bonds can be adjusted. In addition, a vertical axle can be foreseen, by means of which rotation of the mounting plate in the horizontal plane is allowed.

Further, in DE 88 11 010 U1 an oscillating bond is proposed on the chassis of the swathing-tedding device; this bond should oscillate as a tandem (with regard to the direction of moving) on the transversely placed axle located between the two wheels. The said tandem consists of the front and rear pair of wheels which are placed in such a way, that the front pair is fixed on the front side and the rear pair on the back side of both oscillating bonds. With the described solution the raising of the swather due to unevenness of the ground is at the most half a height of the hump.

The swather, described in FR 71.26951 (Publication No. 2.146.674), is equipped with a chassis on which two parallel supporting wheels are fixed with a bond which enables the device to follow the tractor. However, no vertical movement of the supporting wheels is enabled with the described solution.

The swather, proposed in DE 40 13 789 C1, is provided by a chassis with pairs of wheels placed on a joint axle, arranged transversely to the direction of the movement of the device and clamped rotationally around the horizontal axis in the direction of the movement of the device, and at the same time embedded also around the vertical axis in such a way, that it can oscillate. The advantages of the functioning of this kind of the chassis can be expected only in the case, when only one wheel of a wheel pair runs onto an obstacle and causes the raising of the swather.

The solution known from DE 82 18 273 U1 is a device with a vertically movable clamping of the swather chassis wheel; in comparison with the solutions with rigidly fixed wheels, this one has the advantage, that independent movement of the wheels enables better curvilinear movement of the device; the disadvantage of this embodiment is, that in running over the obstacle with only one wheel the belonging side of the swather is raised too high and therefore the device does not perform its function.

Thanks to the improved chassis, i.e. its improved feeling-supporting device, the agricultural harvesting device according to the invention enables lower raising of the swather originating due to great transverse inclinations and with it exact following of the terrain in such a way, that the machine does not leave any hay or cut grass behind it and it does not damage the grass sod. Therefore the invention is characteristic by its simple solution and excellent operating results. The vertical adjustment of the agricultural harvesting device is solved in the sense of central adjustment.

An agricultural harvesting device according to the invention is provided with an operating device, which is connectable through a supporting bond to a tractor. The operating device has a feeling support device, a supporting plate of which is connected to the operating device via a chassis support and a vertical axle; the feeling-supporting device has at least two supporting wheels rotatably mounted on rigid wheel axles on front and rear bonds which can oscillate in the vertical plane around front and rear rigid axles mounted on the supporting plate, the front rigid axle being mounted forwardly of the rear rigid axle, when seen in the direction of operative travel of the harvesting device.

By one aspect of the invention the vertical axle is fixed to the supporting plate, so that the supporting plate can rotate around the axis of this vertical axle. The front and rear rigid axles are both mounted rotatably on the supporting plate, at the forward end of their respective oscillating bonds, when seen in the direction of operating travel of the harvesting device, the front bond being fixed to the front rigid axle and the rear bond being fixed to the rear rigid axle. Accordingly, the angle made between the horizontal and the line joining the rigid axles can be adjusted. The front and rear bonds are linked together by a linkage comprising a lever fixedly mounted on the front rigid axle, directed in the same direction as the front and rear bonds, the lever being linked via a slot and a connecting pivot pin to a short extension of the rear bond, forward of its rigid axle, such that the pivoting movement of one bond results in a pivoting movement of the other bond in the opposite direction. Hereby, the both rigid wheel axles lie rearward of both the front and rear rigid axles and of the pivot pin, when seen in the direction of operating travel of the harvesting device, such that the ratio a/b=c/d is fulfiled, wherein
- a =: the distance between the centres of the rear rigid axle of the rear bond and of the pivot pin linking the lever on the front rigid axle with the rear bond,
- b =: the distance between the centres of the front rigid axle of the front bond and of the pivot pin linking the lever with the rear bond,
- c =: the distance between the centres of the rear rigid axle of the rear bond and of the rigid axle of the supporting wheel on the rear bond,
- d =: the distance between the centres of the front rigid axle of the front bond and of the rigid axle of the supporting wheel on the front bond.

Another aspect of the invention relates to an agricultural harvesting device of which the operating device is also connectable through a supporting bond to a tractor and the operating device has a feeling support device of which a supporting plate is connected to the operating device via a chassis support and a vertical axle. The feeling-supporting device has at least two supporting wheels rotatably mounted on rigid wheel axles on front and rear bonds which can oscillate in the vertical plane around rigid axles mounted on the supporting plate. By this embodiment the vertical axle is fixed to the supporting plate and the supporting plate can rotate around the axis of this vertical axle. The rigid axles are both mounted rotatably, co-linear with each other, on opposite sides of the supporting plate, at the forward end of their respective oscillating bonds, when seen in the direction of operating travel of the harvesting device; the oscillating bonds being fixed to the rigid axles. The front and rear bonds are linked together by a linkage comprising a link connecting the front and rear bonds via respective pivot pins. The said link itself is mounted pivotably on the supporting plate by an axle lying between the pivot pins connecting the link to the front and rear bonds. Thereby, the pivot pin in the front bond lies forward of the said axle but to the rear of the rigid axles, and the pivot pin in the rear bond lies to the rear of the said axle, when seen in the direction of operating travel of the harvesting device, such that the pivoting movement of one bond results in a pivoting movement of the other bond in the opposite direction. Besides, both rigid wheel axles lie rearward of the rigid axles and of the pivot pin, when seen in the direction of operating travel of the harvesting device, such that the ratio a/b=c/d is fulfilled, wherein
- a =: the distance between the centres of the rigid axle of the rear bond and of the pivot pin connecting the link with the rear bond,
- b =: the distance between the centres of the rigid axle of the front bond and of the pivot pin connecting the link with the front bond,
- c =: the distance between the centres of the rigid axle of the rear bond and of the rigid axle of the supporting wheel on the rear bond,
- d =: the distance between the centres of the rigid axle of the front bond and of the rigid axle of the supporting wheel on the front bond.

In general, with the device according to the invention, the oscillation of the supporting plate around the supporting axle is limited, but the supporting plate can be vertically adjusted through the supporting axle. This enables a higher operating speed and at the same time also smoother running of the machine. The oscillation of the chassis around the vertical axle enables, that the chassis can avoid humps on the ground, and in particular the connection to a fixed coupling, which is very economical, and besides also exact following, especially in the case of great transverse inclinations with frontal and trailed embodiments, in particular in the case of two- or multiple-rotor swathers. The raising of the gravity point of the device or in this case the swather due to humps on the ground, is less than half of the hump height and is accurately determined by the ratio a/b = c/d. The described solutions enable the lowering of the gravity point of the machine and comparatively great vertical movements of the supporting wheels placed on the same side of the turning points of the supporting wheel supports.

The agricultural harvesting device will be hereinafter explained in detail by means of embodiments presented in the attached figures showing:
- Fig.1: schematically presented agricultural harvesting device, i.e. a swather, in side view;
- Fig.2: feeling-supporting swather device according to Fig.1, in plan view;
- Fig. 3: a side view of the swather chassis as seen from the top of Fig. 2;
- Fig. 4: a plan view of a further embodiment of the invention;
- Fig.5: further embodiment, in plan view;
- Fig.6: schematically presented swather, in side view; and
- Fig.7: schematically presented agricultural harvesting device, i.e. a tedder, especially the tedder support device, in plan view.

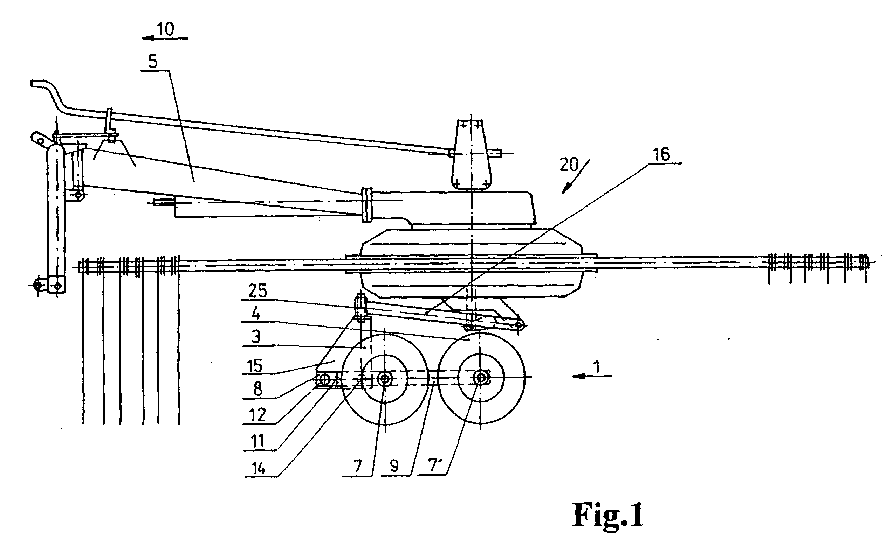

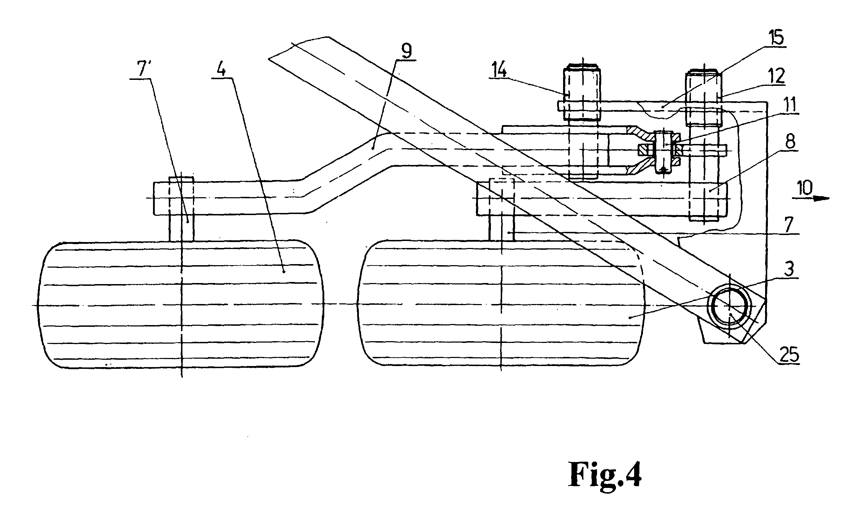

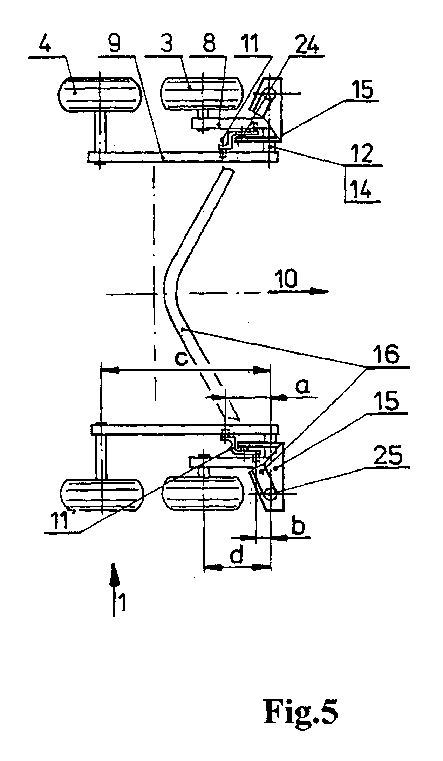

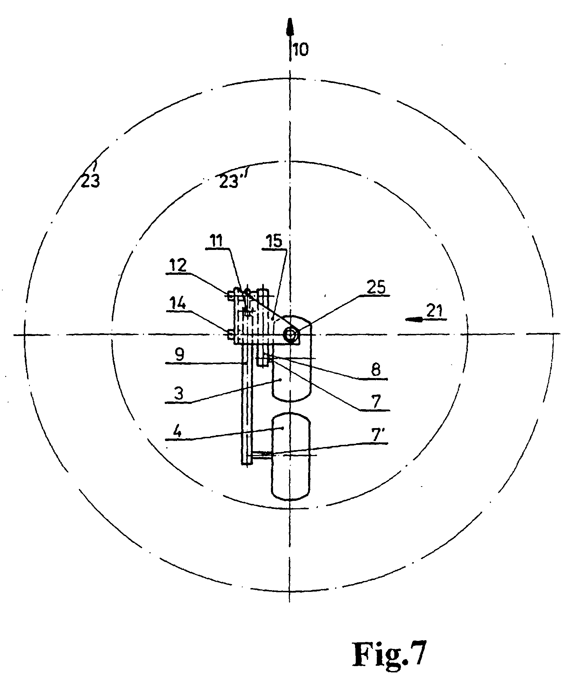

Figures 1-3 represent one embodiment, figures 4 and 7 further embodiments of the first aspect, and figure 5 an embodiment of the second aspect.

The agricultural harvesting device, embodied as a swather 20 intended for coupling to a tractor through a supporting bond 5, is presented in Fig. 1. The swather 20 itself is connected with the feeling-supporting device 1 through the support 16 of the chassis and the vertical supporting axle 25. The feeling-supporting device 1 consists of the front and rear support wheels 3, 4, which are by this embodiment placed on both sides and embedded on the outer side of the front and rear oscillating bond 8, 9 by means of the fixed wheel axles 7, 7'. The said bonds 8, 9 are hinged by means of axles 12, 14, so that they can oscillate in such a manner that both oscillating bonds 8, 9 are turned towards the same direction (with respect to the direction of operating travel of the harvesting device (arrow 10). The axles 12, 14 of the front and rear oscillating bond 8, 9 are placed on the mounting plate 15 and enable the inclination of the bond 8, 9 at an optional angle.

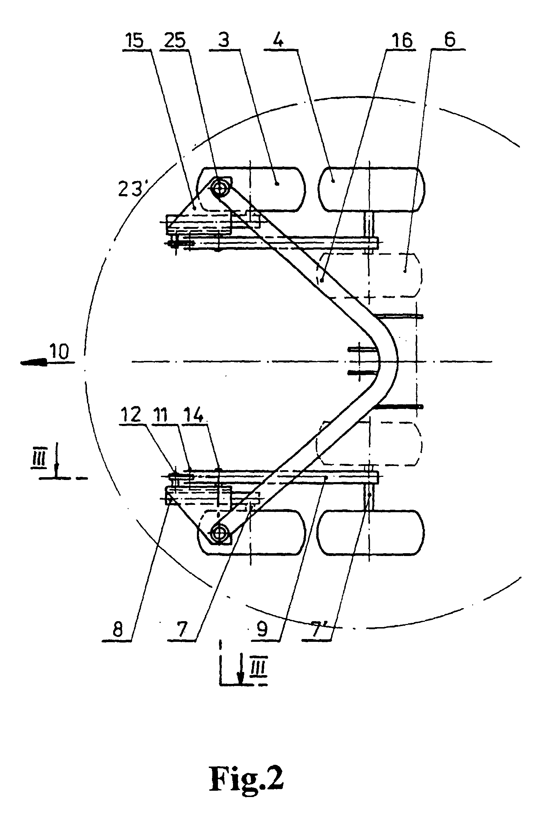

Fig. 2 presents the feeling-supporting device 1 of the swather 20 in plan view. The said device 1 consists of two pairs of wheels 3, 4, arranged one after another in such a way, that the wheels 3, 4 are attached to the oscillating bonds 8, 9 hinged by means of axles 12, 14 in in such a way that they can oscillate, and are turned towards the same direction (with regard to the direction of arrow 10 representing direction of operating travel of the harvesting device). Both of the said oscillating bonds 8, 9 placed one beside the other, are connected with each other through the connecting pivot pin 11. On the fixed wheel axle 7' of the rear oscillating bond 9 the belonging supporting wheel 6 can be embedded in pair or individually or independently.

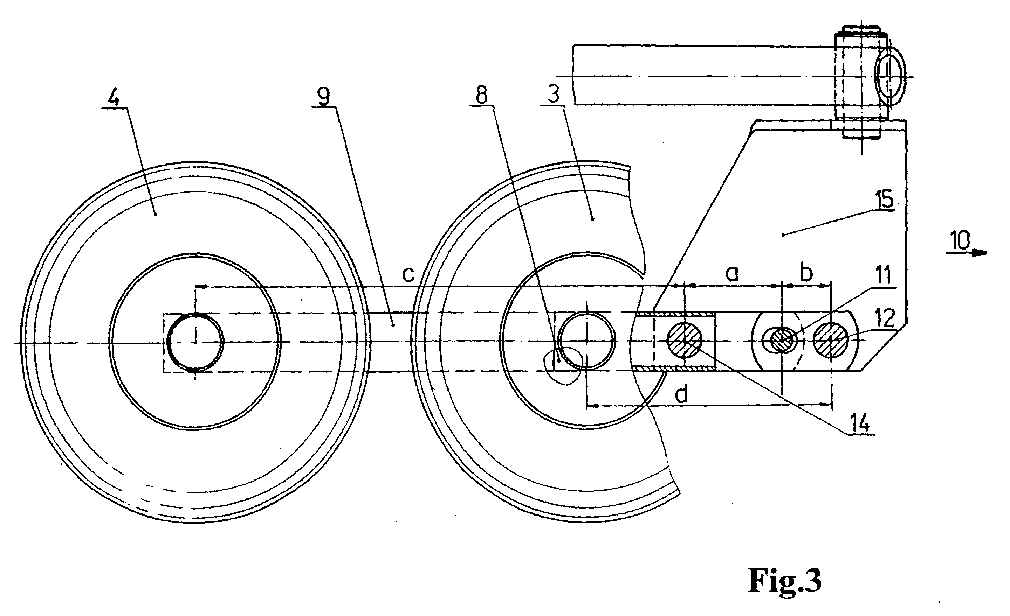

Fig. 3 presents the oscillating bonds 8, 9 which are hinged by means of axles 12, 14, so that again, they can oscillate, and are connected through the connecting pivot pin 11 in such a way, that the ratio a/b = c/d is fulfiled, wherein
- a =: the distance between the centres of the rear rigid axle of the rear bond and of the pivot pin linking the lever on the front rigid axle with the rear bond,
- b =: the distance between the centres of the front rigid axle of the front bond and of the pivot pin linking the lever with the rear bond,
- c =: the distance between the centres of of the rear rigid axle of the rear bond and of the rigid axle of the supporting wheel on the rear bond,
- d =: the distance between the centres of the front rigid axle of the front bond and of the rigid axle of the supporting wheel on the front bond.

The supporting plate 15 is equipped with a vertical axle 25 which enables the oscillation of the chassis with regard to the rotor of the swather 20.

Fig. 4 presents the connection of the oscillating bonds 8, 9 with the supporting plate 15, in which the axles 12, 14 are rigidly fixed. The supporting plate 15 is connected with the chassis support 16 through the supporting axle 25 in such a way, that it can be turned. Thanks to the axles 12, 14, the oscillating bonds 8, 9 are embedded and connected through the connecting pivot pin 11 in a definite transmission ratio.

Fig. 5 presents another embodiment of the feeling-supporting device 1 of the swather 20 with the front and the rear supporting wheels 3, 4 placed on the bonds 8, 9, which are connected each to another through the connecting pivot pin 11 and the link 11' of the connecting pivot pin 11, which is clamped in the axle 24 in such a way, that it can be turned, and connects both oscillating bonds 8, 9 in such a way, that the ratio a/b = c/d is fulfilled, wherein
a = the distance between the centres of the rigid axle (14) of the rear bond (9) and of the pivot pin (11) connecting the link (11') with the rear bond (9),
b = the distance between the centres of the rigid axle (12) of the front bond (8) and of the pivot pin (11) connecting the link (11') with the front bond (8),
c = the distance between the centres of of the rear rigid axle (14) of the rear bond (9) and of the rigid axle (T) of the supporting wheel (4) on the rear bond (9),
d = the distance between the centres of the rigid axle (12) of the front bond (8) and of the rigid axle (7) of the supporting wheel (3) on the front bond (8).

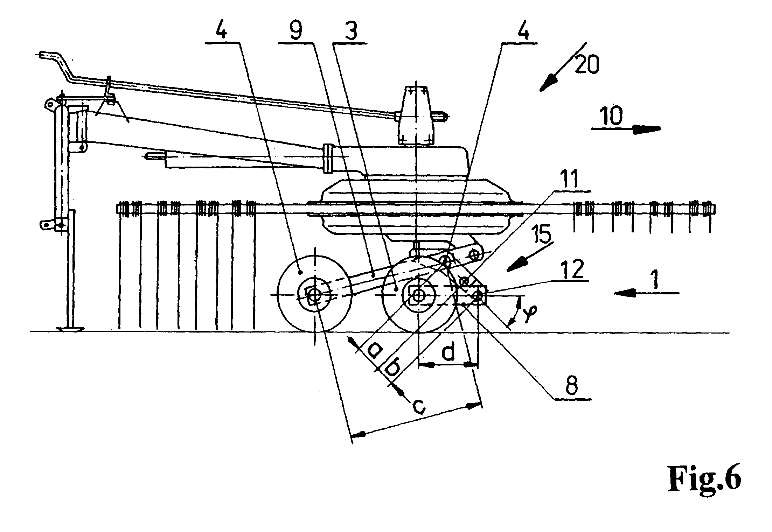

Fig. 6 presents the swather 20, equipped with the feeling-supporting device 1, in which the two oscillating bonds 8, 9 are hinged by means of axles 12, 14, which are rigidly fixed on the supporting plate 15 and can be placed or arranged at a definite, optionally adjustable angle with regard to the direction of the operating travel of the harvesting device (arrow 10). The oscillating bonds 8, 9 are connected each to another by means of the connecting pivot pin 11 in such a way, that the definite ratio a/b = c/d is achieved.

The feeling-supporting device 1 according to Fig. 7 is adapted for the use with another embodiment of the agricultural harvesting device, namely the tedder 21, which is rigidly connected with adequate working tools through a rigid supporting axle 25 and the supporting plate 15, in such a way, that the supporting wheels 3, 4 are placed within the operating area 23 of the device and enable its adjustment to the terrain,

It proceeds from all embodiments dealt with, that the feeling-supporting device 1 of the agricultural harvesting device 20, 21 according to the invention comprises wheels 3, 4 - if necessary even up to six wheels - connected through the oscillating bonds 8, 9 and the connecting pivot pin 11 or the link 11' of the connecting pivot pin 11. The mentioned oscillating bonds 8, 9 on the supporting plate 15 are hinged in the axles 12, 14, which enable oscillating in the vertical plane, and the supporting plate 15 itself is clamped towards the support 16 of the chassis by means of the axle 25 which enables its oscillation around its vertical axis.

Thus the swathing-tedding device in the sense of the presented invention serves mainly for making swaths from spread lodged agricultural fodder, such as cut grass, clover and similar.

The tools, especially the supports of suspension elements arranged in a shape of a star, which rotate around its own axis during the operation of the device, are at a minimum distance from the ground. On rough terrain it is necessary to take care, that the mentioned suspension elements do not move too far from the ground, or that they do not hit the ground. In the first case less fodder is obtained, in the second case the grass sod is damaged and the fodder is soiled. Such a machine can be coupled by means of tractor hydraulics system on the rear or on the front side, and in this case the tractor wheels do not stamp down the fodder.

## Claims

1. Agricultural harvesting device of which the operating device (20) is connectable through a supporting bond (5) to a tractor, the operating device (20) having a feeling support device (1) of which a supporting plate (15) is connected to the operating device (20) via a chassis support (16) and a vertical axle (25), the feeling-supporting device (1) having at least two supporting wheels (3, 4) rotatably mounted on rigid wheel axles (7, 7') on front and rear bonds (8, 9) which can oscillate in the vertical plane around front (12) and rear (14) rigid axles mounted on the supporting plate (15), the front rigid axle (12) being mounted forwardly of the rear rigid axle (14), when seen in the direction of operative travel of the harvesting device,
**characterised in that** the vertical axle (25) is fixed to the supporting plate (15) that the supporting plate (15) can rotate around the axis of this vertical axle (25), that the front and rear rigid axles (12, 14) are both mounted rotatably on the supporting plate (15), at the forward end of their respective oscillating bonds (8, 9), when seen in the direction of operating travel of the harvesting device, the front bond (8) being fixed to the front rigid axle (12), the rear bond (9) being fixed to the rear rigid axle (14),
that the angle made between the horizontal and the line joining the rigid axles (12, 14) can be adjusted,
that the front and rear bonds (8, 9) are linked together by a linkage comprising a lever fixedly mounted on the front rigid axle (12), directed in the same direction as the front and rear bonds (8, 9), the lever being linked via a slot and a connecting pivot pin (11) to a short extension of the rear bond (9), forward of its rigid axle (14), such that the pivoting movement of one bond results in a pivoting movement of the other bond in the opposite direction,
and that the both rigid wheel axles (7, 7') lie rearward of both the front and rear rigid axles (12, 14) and of the pivot pin (11), when seen in the direction of operating travel of the harvesting device,
such that the ratio a/b=c/d is fulfiled, wherein
a = the distance between the centres of the rear rigid axle (14) of the rear bond (9) and of the pivot pin (11) linking the lever on the front rigid axle (12) with the rear bond (9),
b = the distance between the centres of the front rigid axle (12) of the front bond (8) and of the pivot pin (11) linking the lever with the rear bond (9),
c = the distance between the centres of of the rear rigid axle (14) of the rear bond (9) and of the rigid axle (7') of the supporting wheel (4) on the rear bond (9),
d = the distance between the centres of the front rigid axle (12) of the front bond (8) and of the rigid axle (7) of the supporting wheel (3) on the front bond (8).

2. Agricultural harvesting device of which the operating device (20) is connectable through a supporting bond (5) to a tractor, the operating device (20) having a feeling support device (1) of which a supporting plate (15) is connected to the operating device (20) via a chassis support (16) and a vertical axle (25), the feeling-supporting device (1) having at least two supporting wheels (3, 4) rotatably mounted on rigid wheel axles (7, 7') on front and rear bonds (8, 9) which can oscillate in the vertical plane around rigid axles (12, 14) mounted on the supporting plate (15),
**characterised in that** the vertical axle (25) is fixed to the supporting plate (15) that the supporting plate (15) can rotate around the axis of this vertical axle (25), that the rigid axles (12, 14) are both mounted rotatably, co-linear with each other, on opposite sides of the supporting plate (15), at the forward end of their respective oscillating bonds (8, 9), when seen in the direction of operating travel of the harvesting device, the oscillating bonds (8, 9) being fixed to the rigid axles (12, 14), that the front and tear bonds (8, 9) are linked together by a linkage comprising a link (11') connecting the front (8) and rear bonds via respective pivot pins (11), the link (11') itself being mounted pivotably on the supporting plate by an axle (24) lying between the pivot pins connecting the link (11') to the front and rear bonds (8, 9), wherein the pivot pin in the front bond (8) lies forward of the axle (24) but to the rear of the rigid axles (12, 14), and the pivot pin in the rear bond (9) lies to the rear of the axle (24), when seen in the direction of operating travel of the harvesting device, such that the pivoting movement of one bond results in a pivoting movement of the other bond in the opposite direction,
and that both rigid wheel axles (7, 7') lie rearward of the rigid axles (12, 14) and of the pivot pion (11), when seen in the direction of operating travel of the harvesting device,
such that the ratio a/b=c/d is fulfiled, wherein
a = the distance between the centres of the rigid axle (14) of the rear bond (9) and of the pivot pin (11) connecting the link (11') with the rear bond (9),
b = the distance between the centres of the rigid axle (12) of the front bond (8) and of the pivot pin (11) connecting the link (11') with the front bond (8),
c = the distance between the centres of the rigid axle (14) of the rear bond (9) and of the rigid axle (7') of the supporting wheel (4) on the rear bond (9),
d = the distance between the centres of the rigid axle (12) of the front bond (8) and of the rigid axle (7) of the supporting wheel (3) on the front bond (8).

## Patentansprüche

1. Landwirtschaftliche Erntevorrichtung, bei der die Arbeitsvorrichtung (20) durch eine Unterstützungsverbindung (5) mit einem Traktor verbindbar ist, wobei die Arbeitsvorrichtung (20) eine fühlende Unterstützungsvorrichtung (1) aufweist, die eine Unterstützungsplatte (15) aufweist, welche mit der Arbeitsvorrichtung (20) über eine Rahmenunterstützung (16) und eine senkrechte Achse (25) verbunden ist, wobei die fühlende Unterstützungsvorrichtung (1) mindestens zwei tragende Räder (3, 4) aufweist, die drehbar auf festen Radachsen (7, 7') auf vorderen und hinteren Befestigungen (8, 9) befestigt sind, die in der vertikalen Ebene um die festen vorderen (12) und hinteren (14) Achsen schwingen können, die an der Unterstützungsplatte (15) angebracht sind, wobei die vordere feste Achse ( 12) in der Arbeitsbewegungsrichtung der Erntevorrichtung gesehen weiter vorn als die hintere feste Achse (14) angebracht ist,
**dadurch gekennzeichnet, dass** die senkrechte Achse (25) an der Unterstützungsplatte (15) befestigt ist,
dass sich die Unterstützungsplatte (15) um die Mittenachse dieser senkrechten Achse (25) drehen kann,
dass die vorderen und hinteren festen Achsen (12, 14) beide drehbar auf der Unterstützungsplatte (15) an den vorderen Enden ihrer jeweiligen schwingenden Verbindungen (8, 9) in der Arbeitsbewegungsrichtung der Erntevorrichtung gesehen angebracht sind, wobei die vordere Befestigung (8) an der vorderen festen Achse (12) befestigt ist und die hintere Befestigung (9) an der hinteren festen Achse (14) befestigt ist,
dass der Winkel zwischen der Horizontalen und der Linie, welche die festen Achsen (12, 14) verbindet, eingestellt werden kann,
dass die vorderen und hinteren Verbindungen (8, 9) miteinander durch eine Verbindung verbunden sind, die einen Hebel aufweist, der fest auf der vorderen festen Achse (12) befestigt ist, in die gleiche Richtung wie die vorderen und hinteren Verbindungen (8, 9) gerichtet ist, wobei der Hebel über einen Schlitz und einen drehbar verbindenden Stift (11) mit einer kurzen Verlängerung der hinteren Befestigung (9) vor ihrer festen Achse (14) verbunden ist, so dass die Drehbewegung einer Befestigung zu einer Drehbewegung der anderen Befestigung in die entgegengesetzte Richtung führt,
und dass die beiden festen Radachsen (7, 7') hinter beiden festen Vorder- und Hinterachsen (12, 14) und dem drehbaren Stift (11) in der Fahrtrichtung beim Einsatz der Erntevorrichtung gesehen liegen,
so dass das Verhältnis a/b=c/d erfüllt ist, wobei
a = der Abstand zwischen den Mitten der hinteren festen Achse (14) der hinteren Befestigung (9) und des drehbaren Verbindungsstifts (11), der den Hebel auf der vorderen festen Achse (12) mit der hinteren Befestigung (9) verbindet,
b = der Abstand zwischen den Mitten der vorderen festen Achse (12) der vorderen Befestigung (8) und des drehbaren Stifts (11), der den Hebel mit der hinteren Befestigung (9) verbindet,
c = der Abstand zwischen den Mitten der hinteren festen Achse (14) der hinteren Befestigung (9) und der festen Achse (7') des tragenden Rades (4) auf der hinteren Befestigung (9),
d = der Abstand zwischen den Mitten der vorderen festen Achse (12) der vorderen Befestigung (8) und der festen Achse (7) des tragenden Rades (3) auf der vorderen Befestigung (8).

2. Landwirtschaftliche Erntevorrichtung, bei der die Arbeitsvorrichtung (20) durch eine Unterstütungsverbindung (5) mit einem Traktor verbindbar ist, wobei die Arbeitsvorrichtung (20) eine fühlende Unterstützungsvorrichtung (1) aufweist, die eine Unterstützungsplatte (15) aufweist, welche mit der Arbeitsvorrichtung (20) über eine Rahmenunterstützung (16) und eine senkrechte Achse (25) verbunden ist, wobei die fühlende Unterstützungsvorrichtung (1) mindestens zwei tragende Räder (3, 4) aufweist, die drehbar auf festen Radachsen (7, 7') an vorderen und hinteren Befestigungen (8, 9) befestigt sind, die in der vertikalen Ebene um feste Achsen (12, 14) schwingen können, die an der Unterstützungsplatte (15) angebracht sind,
**dadurch gekennzeichnet, dass** die senkrechte Achse (25) an der Unterstützungsplatte (15) befestigt ist,
dass sich die Unterstützungsplatte (15) um die Mittellinie dieser senkrechten Achse (25) drehen kann,
dass die festen Achsen (12, 14) beide drehbar ko-linear miteinander auf gegenüberliegenden Seiten der Unterstützungsplatte (15) am vorderen Ende ihrer jeweiligen schwingenden Befestigung (8, 9) in der Fahrtrichtung beim Einsatz der Erntevorrichtung gesehen angebracht sind, wobei die schwingenden Befestigungen (8, 9) an den festen Achsen (12, 14) befestigt sind,
dass die vorderen und hinteren Befestigungen (8, 9) miteinander durch eine Verbindung verbunden sind, die ein Verbindungsglied (11') aufweist, welches die vorderen (8) und hinteren Verbindungen über jeweilige drehbare Stifte (11) verbindet, wobei das Verbindungsglied (11') selbst drehbar über eine Achse (24), welche zwischen den drehbaren Verbindungsstiften liegt, die das Verbindungsglied (11') mit den vorderen und hinteren Befestigungen (8, 9) verbinden, an der Unterstützungsplatte angebracht ist, wobei der drehbare Stift in der vorderen Verbindung (8) vor der Achse (24) aber hinter den festen Achsen (12, 14) liegt und der drehbare Stift in der hinteren Befestigung (9) hinter der Achse (24) liegt, jeweils in der Fahrtrichtung beim Einsatz der Erntevorrichtung gesehen, so dass die drehende Bewegung einer Befestigung zu einer Drehbewegung der anderen Befestigung in der entgegengesetzten Richtung führt,
und dass beide feststehenden Radachsen (7, 7') hinter den feststehenden Achsen (12, 14) und dem verbindungsstift (11) liegen, jeweils in der Fahrtrichtung bei Einsatz der Erntevorrichtung gesehen,
so dass das Verhältnis a/b=c/d erfüllt wird, wobei
a = der Abstand zwischen den Mitten der festen Achse (14) der hinteren Befestigung (9) und des drehbaren Stifts (11), der das Verbindungsglied (11') mit der hinteren Befestigung (9) verbindet,
b = der Abstand zwischen den Mitten der festen Achse (12) der vorderen Befestigung (8) und des drehbaren Stifts (11), der das Verbindungsglied (11') mit der vorderen Befestigung (8) verbindet,
c = der Abstand zwischen den Mitten der festen Achse (14) der hinteren Befestigung (9) und der festen Achse (7') des tragenden Rades (4) an der hinteren Befestigung (9),
d = der Abstand zwischen den Mitten der festen Achse (12) der vorderen Befestigung (8) und der festen Achse (7) des tragenden Rades (3) an der vorderen Befestigung (8).

## Revendications

1. Equipement agricole servant aux récoltes, dont le dispositif d'actionnement (20) peut être attelé à un tracteur par l'intermédiaire d'une flèche de support (5), le dispositif d'actionnement (20) comportant un dispositif de support (1) en suspension dont une plaque de support (15) est reliée au dispositif d'actionnement (20) au moyen d'un support de châssis (16) et d'un tourillon vertical (25), le dispositif de support (1) en suspension comprenant au moins deux roues de support (3, 4) montées à rotation sur des essieux rigides (7, 7'), sur des barres d'accouplement antérieure et postérieure (8, 9) pouvant osciller, dans le plan vertical, autour de pivots rigides antérieur (12) et postérieur (14) montés sur la plaque de support (15), le pivot rigide antérieur (12) étant monté en avant du pivot rigide postérieur (15) en observant dans la direction du déplacement opérant de l'équipement de récolte,
**caractérisé par le fait que** le tourillon vertical (25) est fixé à la plaque de support (15) ;
que la plaque de support (15) peut tourner autour de l'axe de ce tourillon vertical (25) ;
que les pivots rigides antérieur et postérieur (12, 14) sont, l'un et l'autre, montés à rotation sur la plaque de support (15), à l'extrémité antérieure de leurs barres respectives d'accouplement oscillantes (8, 9) en observant dans la direction du déplacement opérant de l'équipement de récolte, la barre d'accouplement antérieure (8) étant fixée au pivot rigide antérieur (12), la barre d'accouplement postérieure (9) étant fixée au pivot rigide postérieur (14) ; que l'angle, formé entre l'horizontale et la ligne reliant les pivots rigides (12, 14), peut être réglé ;
que les barres d'accouplement antérieure et postérieure (8, 9) sont articulées ensemble par une tringlerie comprenant un levier monté fixe sur le pivot rigide antérieur (12), orienté dans la même direction que les barres d'accouplement antérieure et postérieure (8, 9), le levier étant articulé, par l'intermédiaire d'une boutonnière et d'un téton pivotant de solidarisation (11), sur un court prolongement de la barre d'accouplement postérieure (9), en avant de son pivot rigide (14), de façon telle que le mouvement pivotant de l'une des barres d'accouplement se traduise par un mouvement pivotant de l'autre barre d'accouplement, dans la direction opposée ;
et que les deux essieux rigides (7, 7') des roues se trouvent à l'arriére des deux pivots rigides antérieur et postérieur (12, 14), et du téton pivotant (11), en observant la direction du déplacement opérant de l'équipement de récolte, de sorte qu'il est satisfait au rapport a/b = c/d dans lequel
a = la distance entre les centres du pivot rigide postérieur (14) de la barre d'accouplement postérieure (9), et du téton pivotant (11) articulant le levier avec la barre d'accouplement postérieure (9), sur le pivot rigide antérieur (12),
b = la distance entre les centres du pivot rigide antérieur (12) de la barre d'accouplement antérieure (8), et du téton pivotant (11) articulant le levier avec la barre d'accouplement postérieure (9),
c = la distance entre les centres du pivot rigide postérieur (14) de la barre d'accouplement postérieure (9), et de l'essieu rigide (7') de la roue de support (4) sur la barre d'accouplement postérieure (9),
d = la distance entre les centres du pivot rigide antérieur (12) de la barre d'accouplement antérieure (8), et de l'essieu rigide (7) de la roue de support (3) sur la barre d'accouplement antérieure (8).

2. Equipement agricole servant aux récoltes, dont le dispositif d'actionnement (20) peut être attelé à un tracteur par l'intermédiaire d'une flèche de support (5), le dispositif d'actionnement (20) comportant un dispositif de support (1) en suspension dont une plaque de support (15) est reliée au dispositif d'actionnement (20) au moyen d'un support de châssis (16) et d'un tourillon vertical (25), le dispositif de support (1) en suspension comprenant au moins deux roues de support (3, 4) montées à rotation sur des essieux rigides (7, 7'), sur des barres d'accouplement antérieure et postérieure (8, 9) pouvant osciller, dans le plan vertical, autour de pivots rigides (12, 14) montés sur la plaque de support (15),
**caractérisé par le fait que** le tourillon vertical (25) est fixé à la plaque de support (15) ;
que la plaque de support (15) peut tourner autour de l'axe de ce tourillon vertical (25) ;
que les pivots rigides (12, 14) sont l'un et l'autre montés à rotation, colinéairement l'un à l'autre, sur des côtés opposés de la plaque de support (15), à l'extrémité antérieure de leurs barres respectives d'accouplement oscillantes (8, 9) en observant dans la direction du déplacement opérant de l'équipement de récolte, les barres d'accouplement oscillantes (8, 9) étant fixées aux pivots rigides (12, 14) ;
que les barres d'accouplement antérieure et postérieure (8, 9) sont articulées ensemble par une tringlerie comprenant une biellette (11') reliant les barres d'accouplement antérieure (8) et postérieure par l'intermédiaire de tétons pivotants (11) respectifs, la biellette (11') proprement dite étant montée à pivotement, sur la plaque de support, par un tourillon (24) interposé entre les tétons pivotants reliant la biellette (11') aux barres d'accouplement antérieure et postérieure (8, 9), sachant que le téton pivotant situé dans la barre d'accouplement antérieure (8) se trouve à l'avant du tourillon (24), mais à l'arrière des pivots rigides (12, 14), et que le téton pivotant situé dans la barre d'accouplement postérieure (9) se trouve à l'arrière du tourillon (24) en observant dans la direction du déplacement opérant de l'équipement de récolte, de façon telle que le mouvement pivotant de l'une des barres d'accouplement se traduise par un mouvement pivotant de l'autre barre d'accouplement, dans la direction opposée ;
et que les essieux rigides (7, 7') des roues se trouvent, l'un et l'autre, à l'arrière des pivots rigides (12, 14) et du téton pivotant (11) en observant dans la direction du déplacement opérant de l'équipement de récolte,
de sorte qu'il est satisfait au rapport a/b = c/d dans lequel
a = la distance entre les centres du pivot rigide (14) de la barre d'accouplement postérieure (9), et du téton pivotant (11) reliant la biellette (11') à la barre d'accouplement postérieure (9),
b = la distance entre les centres du pivot rigide (12) de la barre d'accouplement antérieure (8), et du téton pivotant (11) reliant la biellette (11') à la barre d'accouplement antérieure (8),
c = la distance entre les centres du pivot rigide (14) de la barre d'accouplement postérieure (9), et de l'essieu rigide (7') de la roue de support (4) sur la barre d'accouplement postérieure (9),
d = la distance entre les centres du pivot rigide (12) de la barre d'accouplement antérieure (8), et de l'essieu rigide (7) de la roue de support (3) sur la barre d'accouplement antérieure (8).
